# EUROPEAN PATENT APPLICATION

(11) **EP 4 549 251 A1**
(43) Date of publication of application: **07.05.2025**
(21) Application number: 23207719.8
(22) Date of filing: 03.11.2023
(51) Int. Cl.: B60Q 1/50, B60Q 5/00, G10K 9/20, G10K 13/00, G10K 9/122, G10K 9/13, H01Q 1/42

(54) **A VEHICLE BODY PANEL ASSEMBLY WITH INTEGRATED FUNCTIONAL COMPONENTS**

(71) Applicant: HELLA Saturnus Slovenija d.o.o., 1001 Ljubljana (SI)
(72) Inventor: Matosa, Gasper, 1000 Ljubljana (SI); Pintar, Miljenko, 4000 Kranj (SI); Tekavcic, Andraz, 1000 Ljubljana (SI); Wagner, Andrej, 1000 Ljubljana (SI); Stante, Rok, 4207 Cerklje na Gorenjskem (SI); Smuc, Matevz, 1000 Ljubljana (SI)
(74) Representative: Behr-Wenning, Gregor

(57) **Abstract**

The present invention relates to a vehicle body panel assembly,
wherein the vehicle body panel assembly comprises:
- at least one structural element (101, 102, 103)
- a connection interface (104) for connecting the at least one structural element with a vehicle body,
- at least one sound module (105) comprising at least one exciter (106) coupled to the at least one structural element (101, 102, 103),
- at least one light source (108) coupled to the at least one structural element (101, 102, 103), and
- at least one component (110) from the following list of components coupled to the at least one structural element (101, 102, 103): at least one navigation unit, at least one communication unit (229), at least one antenna unit (205), at least one lighting unit, at least one signalling light unit, at least one illumination unit, at least one heating unit (221), at least one cleaning unit, at least one design element (211), at least one lighting cover lens (209), at least one sensor cover lens (207), at least one sensor housing, at least one radome (205), at least one lidome, at least one safety unit, at least one camera unit, at least one parking system unit, at least one emblem unit and at least one sensor unit, in particular at least one radar sensor unit, at least one lidar unit, at least one ultrasonic sensor unit, at least one parking sensor unit,

wherein the at least one exciter (106) is configured to cause the at least one structural element (101, 102, 103) to oscillate in a given band of frequencies.

## Description

### Field of the disclosure

The present disclosure generally relates to vehicle exterior body panel assemblies. Such panel assemblies may be uniquely shaped panels that provide covering for a vehicle system and may protect occupants from elements and during collisions.

The present disclosure more specifically relates to vehicle body panel assemblies with integrated components and sections of vehicle body panel, such as a mask. Further, the disclosure relates to a vehicle comprising a vehicle body panel assembly, a method for manufacturing a vehicle body panel assembly, and a method for manufacturing a vehicle.

### Background of the disclosure

Vehicles are equipped with an increasing number of electronic components, in particular sensors for sensing an environment. These components need to be placed in given structures of a vehicle.

This increases the number of components, the complexity of the final product (e.g., the front of the car panel), and the complexity of the assembly, all of which also directly increase the costs.

Document DE 10 2014 104 944 A1 discloses a radar sensor design where instead of having a customary housing for the radar sensor, the antenna(s) are covered directly with another material, such as polymer or coating, eliminating the gap between the antenna(s) and the housing.

Document "Conformal Superstrate Loaded Automotive Radar Antenna for Integration in Polymer Car Body Panels", Proceedings of the Fourth European Conference on Antennas and Propagation, 2010 by Andreas Kilian and Lorenz-Peter Schmidt describes a design and method for backmolding a radar antenna into a plastic component of a car body panel, where a 24 GHz antenna is manufactured and hot embossing of copper to a polymer foil is used. The resulting final structure from front to back comprises a paint foil, an antenna foil (with the antenna and a ground plate) and backmolded material.

Document EP 3 336 575 A1 describes an antenna as part of a radome. The radome forms a dielectric resonator, which, in combination with the antenna element, forms a radar sensor. The document refers to slot antennas and not patch antennas, which are mostly used now for radar sensors and use a different technology.

Document DE 10 2016 210 769 A1 describes multiple film antennas for 360° field of view coverage. The document addresses the use of several film antennas, which are produced on flat foils and attached (e.g., glued by an adhesive layer) to different parts of the vehicle to assure full coverage of the surroundings. This helps to reduce the number of full radar sensor units by placing antennas in different positions on the vehicle.

Document DE 10 2014 214 329 A1 proposes to use a decorated and heated radar cover as a radome. Foils, which are molded from behind, are used to achieve decoration, heating, isolation and filtering of radar signals. As the result the housing of the radar sensor itself serves as an external radome, which can be used as a radar unit cover or as a component, which is integrated into a bumper of the vehicle.

While the documents cited above outline possibilities to simplify the assembly of the radar sensor and the radome or to integrate the radar antenna(s) in a plastic material, the final product is either a simple component, which still needs to be assembled into a vehicle body, such as a mask, and/or it does not combine all the functionalities that are desired by the manufacturers and which might even directly affect and improve the functionality of the radar system itself, e.g., a heating system.

### Summary of the disclosure

In light of the aforementioned, it is one object of the present disclosure to provide a vehicle body panel assembly that allows vehicle manufacturers to reduce the number of components and/or the complexity of the assembly.

It is a further object of the present disclosure to provide a vehicle comprising the vehicle body panel assembly, a method for manufacturing the vehicle body panel assembly and a method for manufacturing a vehicle comprising the vehicle body panel assembly.

According to one aspect of the present disclosure, there is provided a vehicle body panel assembly.

The vehicle body panel assembly disclosed herein comprises at least one structural element a connection interface for connecting the at least one structural element with a vehicle body, at least one sound module comprising at least one exciter coupled to the at least one structural element, at least one light source coupled to the at least one structural element, and at least one component from the following list of components coupled to the at least one structural element: at least one navigation unit, at least one communication unit, at least one antenna unit, at least one lighting unit, at least one signalling light unit, at least one illumination unit, at least one heating unit, at least one cleaning unit, at least one design element, at least one lighting cover lens, at least one sensor cover lens, at least one sensor housing, at least one radome, at least one lidome, at least one safety unit, at least one camera unit, at least one parking system unit, at least one emblem unit and at least one sensor unit, in particular at least one radar sensor unit, at least one ultrasonic sensor unit, or at least one parking sensor unit, (for example, for 24 GHz, 77 GHz or 79 GHz technology or any other frequency range), at least one lidar (light detection and ranging) unit, at least one ultrasonic sensor unit, and/or at least one parking sensor unit (for example, for a parking-distance-control system), wherein the at least one exciter is configured to cause the at least one structural element to oscillate in a given band of frequencies.

It is to be noted that other components that are not mentioned in the above list may also be fixedly attached to the structural element. Further, the lists of components that may be included in the vehicle body panel may be changed, in particular, by deleting one or more of the components mentioned in the list.

In the context of the present invention, a vehicle body panel shall be understood to include also openings in the exterior of the car body, such as windows and glass panels in the roof.

In the context of the present invention, a structural element shall be understood as an element suitable for carrying an exciter, preferably a vehicle body panel in a form of a transparent/translucent polycarbonate lens, which may optionally have the function of an optical lens. Alternatively, a structural element may be an additional inner component, such as a bezel or a housing of a vehicle body panel assembly.

In the context of the present invention, a frequency band may comprise a single frequency or a plurality of frequencies.

Thanks to the integration of at least two components into the structural element, the vehicle body panel assembly provides a complex combination of several functionalities, which so far have been considered as separate components. The vehicle body panel assembly according to the present disclosure thus forms a "multifunctional" vehicle body panel assembly, which reduces the number of components, the weight, the package space, the costs as well as the complexity of the assembly and improves the tolerance chain. Thus, the vehicle body panel assembly may form a so-called phygital shield for a vehicle.

The vehicle may be a motor vehicle or electrical vehicle (such as a car, a truck, a bus, a mobility scooter or a motorcycle) or a wagon or a bicycle or a railed vehicle (such as a train or a tram) or a watercraft (such as a ship, a boat) or a or an aircraft (such as an airplane, a helicopter or an aerostat) or any other vehicle.

The invention disclosed herein is based on the integration of a plurality of components into a vehicle body panel assembly. In particular, at least one sound module comprising an exciter, such as piezzo element, linear resonant actuator, solenoid or any other similar device, coupled to the at least one structural element is integrated in the vehicle body panel assembly. The at least one exciter is configured to cause the at least one structural element to oscillate in a given band of frequencies. Thus, the structural element is used to transmit waves oscillating in a given band of frequencies into an environment.

By using the at least one exciter of the vehicle body panel assembly disclosed herein to induce waves oscillating in a given band of frequencies into the structural element and into an environment, there is no need for using a membrane or speaker. Thus, the vehicle body panel assembly can be mounted in an outer shell of a vehicle that is in direct contact with water without the risk of damage to the sound module.

Accordingly, structures for shielding the sound module against an environment that are cost- and weight-intensive can be avoided by using the structural element of the vehicle body panel assembly as an oscillator stimulated by the at least one exciter of the at least one sound module. Thus, the vehicle body panel assembly disclosed herein is very light and robust.

Further, the waves generated by oscillating the structural element of the vehicle body panel assembly disclosed herein are directly transmitted into an environment and, therefore, are very energy-efficient. For example, a warning tone that warns a pedestrian can be transmitted to the pedestrian directly, so there is no need for loud sound sources like horns covered by a vehicles body structure.

The vehicle body panel assembly disclosed herein comprises a connection interface, such as a plurality of clips and/or screws and/or geometries that urge the vehicle body panel assembly into a predetermined position relative to a vehicle frame or sub-frame.

The at least one light source of the vehicle body panel assembly may be a LED, a laser, a display or any other kind of light source.

In some embodiments, the plurality of components, which are fixedly attached to the structural element, may comprise at least three, four, or five components from the list of components as disclosed above.

In some embodiments, the at least one exciter is fixedly attached to the structural element.

For a fixed attachment of the at least one exciter to the structural element, the at least one exciter may be covered by the structural element as such, such as by mold forming the structural element.

The at least one exciter may be directly or indirectly, for example, via an additional component attached to the structural element. However, the at least one exciter is mechanically coupled with the structural element, such that an oscillation of the at least one exciter is induced into the structural element.

In some embodiments, the structural element comprises a lens, in particular a front phygital shield.

A lens, such as a portion of a front end of a vehicle that is carried by a subframe, in particular a portion that guides a stream of air into an inner portion of the vehicle, can be used as the structural element as it provides a large surface for generating waves in the given frequency band. In particular, a lens may be used to generate a tone that can be heard by humans.

In some embodiments, the at least one sound module comprises at least one sound source configured to generate and/or amplify a sound signal to the at least one exciter, such that the sound signal is transformed into sound waves by the at least one structural element.

The sound source may comprise a sound processor and/or an amplifier. The sound source may be attached to the structural element or located at a distance from the structural element and connected to the at least one exciter through an interface, such as a wired or a wireless connection.

In some embodiments, the vehicle body panel assembly comprises, as the at least one component at least one sensor unit fixedly attached to the structural element and at least partly integrated in the structural element.

By fixedly attaching at least one sensor unit to the structural element, the vehicle body panel assembly serves as a carrier for providing multiple technologies for interacting with an environment. Thus, a vehicle can be equipped with multiple technologies for interacting with an environment by mounting the vehicle body panel assembly to the vehicle.

In some embodiments, the structural element is a molded structure.

By forming the structural element from mold, the components attached to the structural element can be covered by mold, such that the components form an integral part of the vehicle body panel assembly.

Thus, in some embodiments, the connection interface, the least one sound module, the at least one light source, and the at least one component are at least partially integrated into the structural element.

In some embodiments, the connection interface is configured to mechanically connect the vehicle body panel assembly to a front or a rear or a side or a top of a vehicle.

The connection interface may be formed correspondingly to a corresponding structure of a vehicle, where the vehicle body panel assembly is to be attached.

In some embodiments, the vehicle body panel assembly further comprises a socket and/or a cable, in particular exactly one socket and/or exactly one cable for electrical connection of the vehicle body panel assembly with an external electrical element.

By using a socket and/or a cable, electrical signals for charging and/or communicating with components of the vehicle body panel assembly can be exchanged with an external electrical element, such as a sound processor or a voltage source, for example.

According to another aspect of the present invention, a vehicle is disclosed. The vehicle comprising at least one embodiment of the vehicle body panel assembly disclosed herein.

According to another aspect of the present invention, a method for manufacturing an embodiment of the vehicle body panel assembly disclosed herein is disclosed.

The method comprises a molding process, in particular an inmolding and/or overmolding and/or 2K molding and/or more than 2K molding process, that produces the structural element, and an attaching process to fixedly attach the at least one sound module, the at least one light source, and the at least one component to the structural element.

In some embodiments, the at least one sound module, the at least one light source, and the at least one component are attached to the structural element by at least partially covering them by mold material during the molding process.

According to another aspect of the present invention, a method for manufacturing a vehicle is disclosed. The method comprises an embodiment of the vehicle body panel assembly disclosed herein being mounted on a vehicle.

In some embodiments, the vehicle body panel assembly is mounted on the vehicle as a single part.

### Brief description of the drawings

The disclosure will now be described by way of non-limiting examples only, with reference to the accompanying drawings, in which
Fig. 1 shows a schematic view of an exemplary vehicle body panel assembly according to the present invention;
Fig. 2 shows a further example of the vehicle body panel assembly according to the present invention;
Figs. 3 to 9 show illustrative examples of parts of the vehicle body panel assembly according to the present invention;
Fig. 10 an example of the vehicle according to the present invention;
Fig. 11 an example of the method for manufacturing a vehicle body panel assembly according to the present invention.

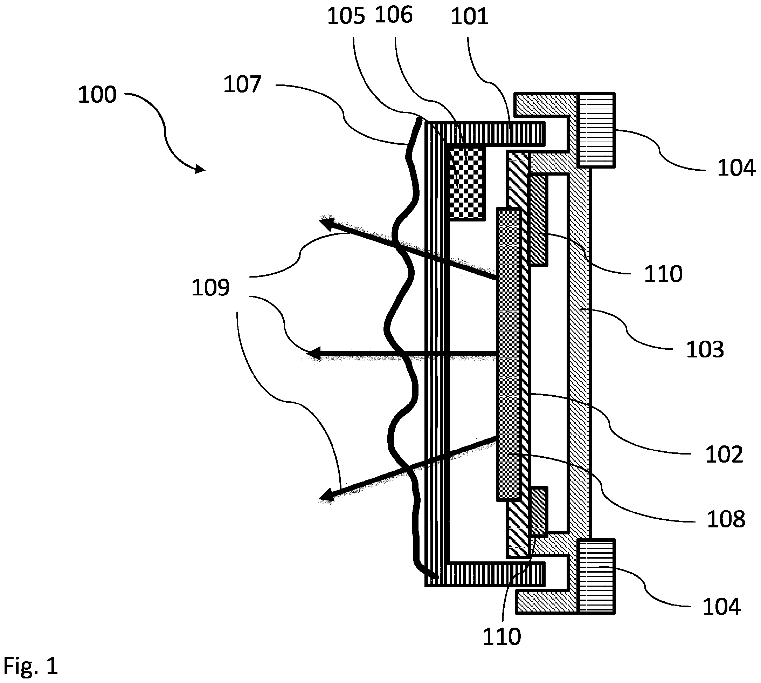

In Fig. 1, a vehicle body panel assembly 100 is shown. The vehicle body panel assembly 100 comprises a first structural element 101, a second structural element 102, and a third structural element 103, a connection interface 104 for connecting the at least one structural element with a vehicle body, a sound module 105 comprising an exciter 106, a light source 107 and a further component 110, such as a design element or a sensor, for example.

The first structural element 101 forms a lens covering a panel, the second structural element 102 forms a support structure for mechanically enforcing the vehicle body panel assembly 100, the third structural element 103 forms a housing of the vehicle body panel assembly 100, ensuring water tightness of the vehicle body panel assembly 100.

In Fig. 1, the exciter 106 is attached to the first structural element 101 and the light source 108 is attached to the second structural element 102, for illustrative reasons. However, the sound module 105, in particular the exciter 106 and the light source 108 may be attached to the first structural element 101, the second structural element 102, and/or the third structural element 103 in any combination.

The light source 108 may be a LED, laser, light guide, display, or any other kind of light source.

In particular, at least one exciter 106 may be attached to the first structural element 101, the second structural element 102, and/or the third structural element 103.

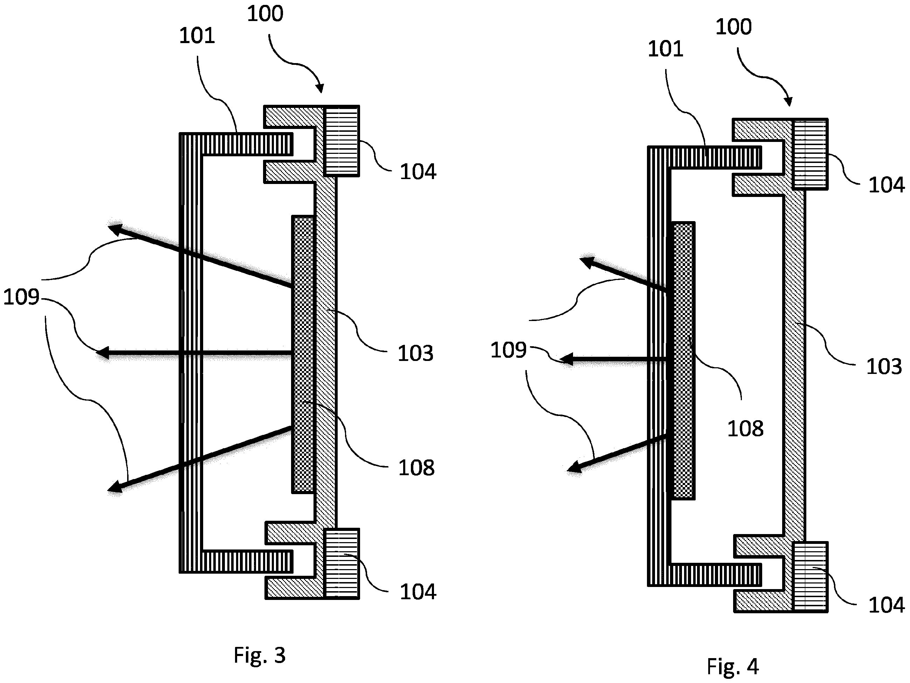

In particular, at least one light source 108 may be attached to the first structural element 101, the second structural element 102, and/or the third structural element 103, as shown in Fig. 3 to 9, for example.

When activated, the exciter 106 induces movement with a given frequency into the first structural element 101 such that the first structural element 101 oscillates at the given frequency and transmits waves, in particular sound waves at the given frequency in the environment, as indicated by line 107.

When activated, the light source 108 transmits light in the environment, as indicated by arrows 109. For this reason, the first structural element 101 is at least partially transparent.

By using the connection interface 104, the vehicle body panel assembly 100 can be mounted to a vehicle, such as the vehicle 200 shown in Fig. 3, for example, as one piece. Thus, installation of the vehicle body panel assembly 100 with all its components is time and space efficient.

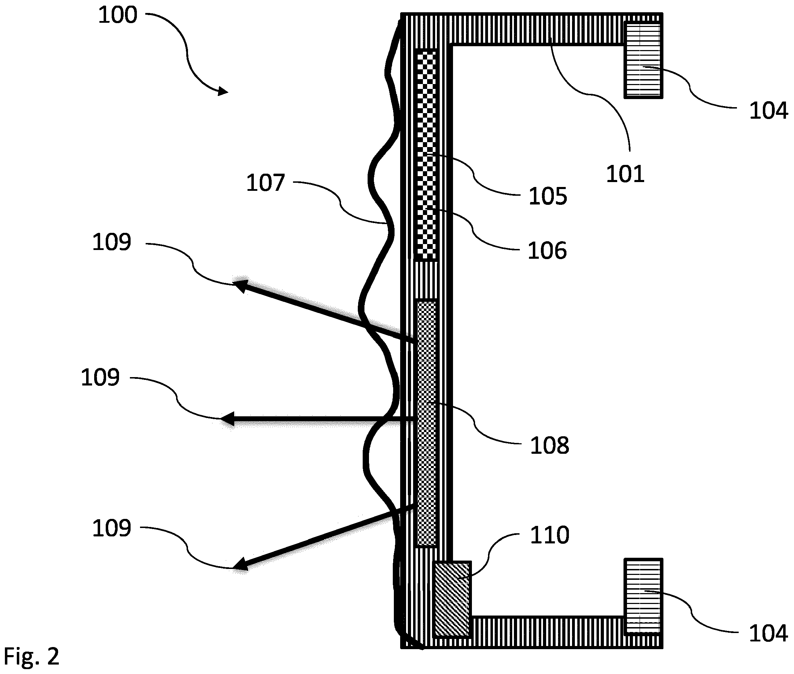

In Fig. 2, another embodiment of the vehicle body panel assembly 100 is shown. Here, only the first structural element 101 is used to hold both, the sound module 105 comprising the exciter 106 and the light source 108.

The vehicle body panel assembly 100 shown in Fig. 2 may be a grille for a vehicle, for example.

In Fig. 3, the light source 108, is attached to the third structural element 103.

In Fig. 4, the light source 108, is attached to the first structural element 101.

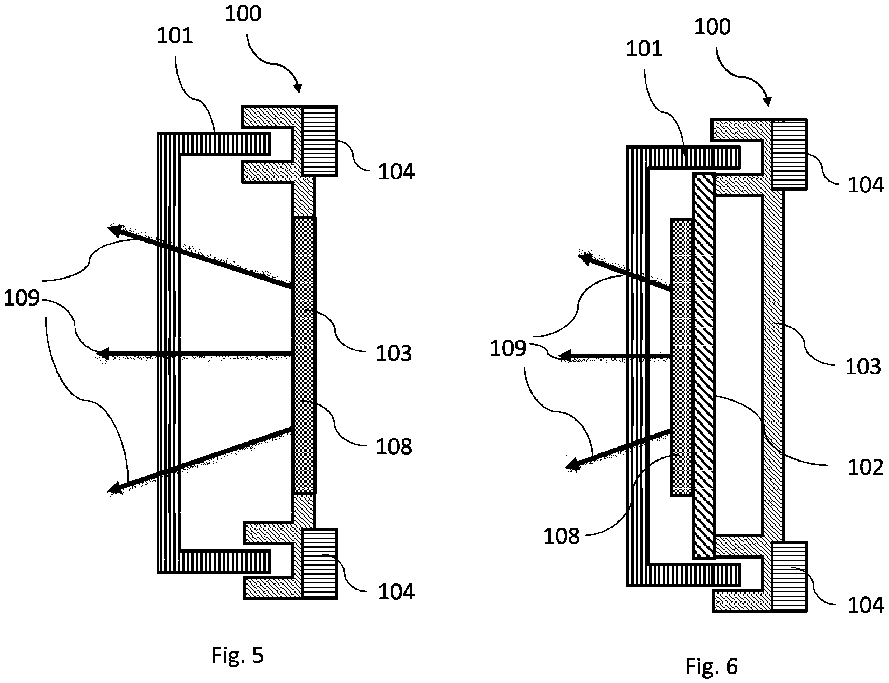

In Fig. 5, the light source 108, is integrated in a hole in the third structural element 103, which leads to a favorable cooling and replaceability of the light source 108.

In Fig. 6, the light source 108, is attached to the second structural element 102, which may be a carrier for carrying the light source 108 or a bezel. Thus, the light source 108 may be a display for displaying graphics on the second structural element 102 which can be seen from an environment looking at the first structural element 101.

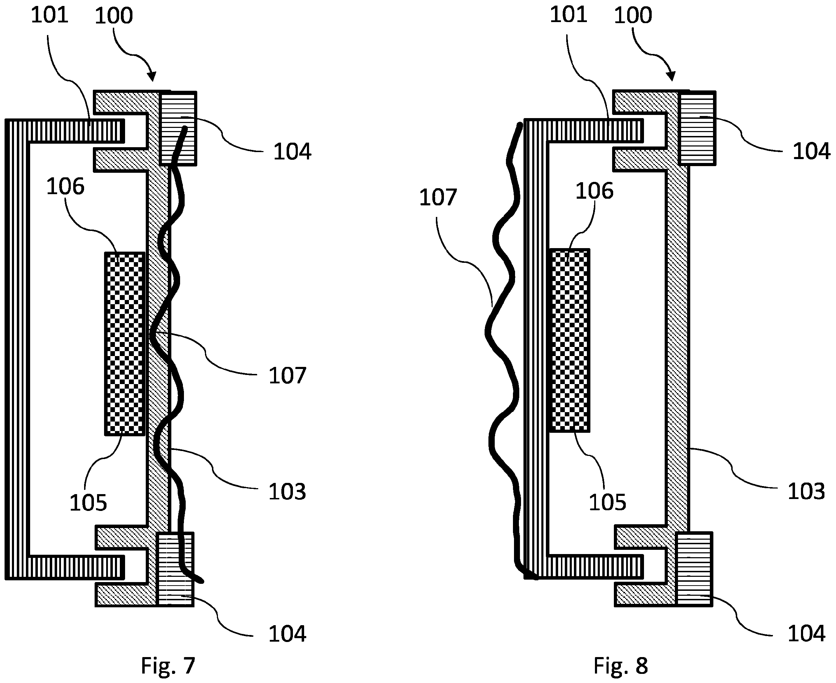

In Fig. 7, the exciter 106 is attached to the third structural element 103, which leads to an oscillating housing of the vehicle body panel assembly 100.

In Fig. 8, the exciter 106 is attached to the first structural element 101, which leads to an oscillating lens of the vehicle body panel assembly 100.

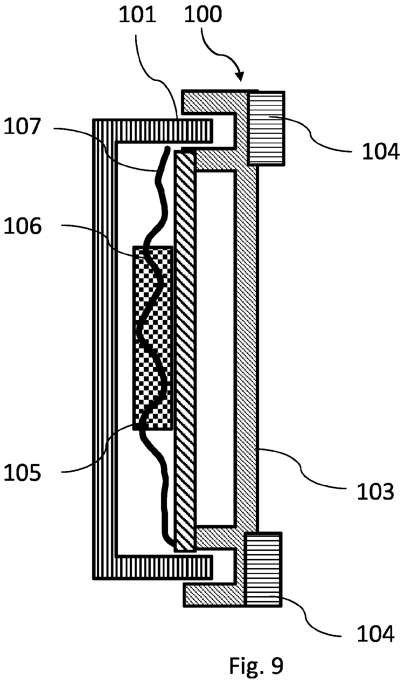

In Fig. 9, the exciter 106 is attached to the second structural element 102, which leads to an oscillating inner component, in particular a bezel, of the vehicle body panel assembly 100.

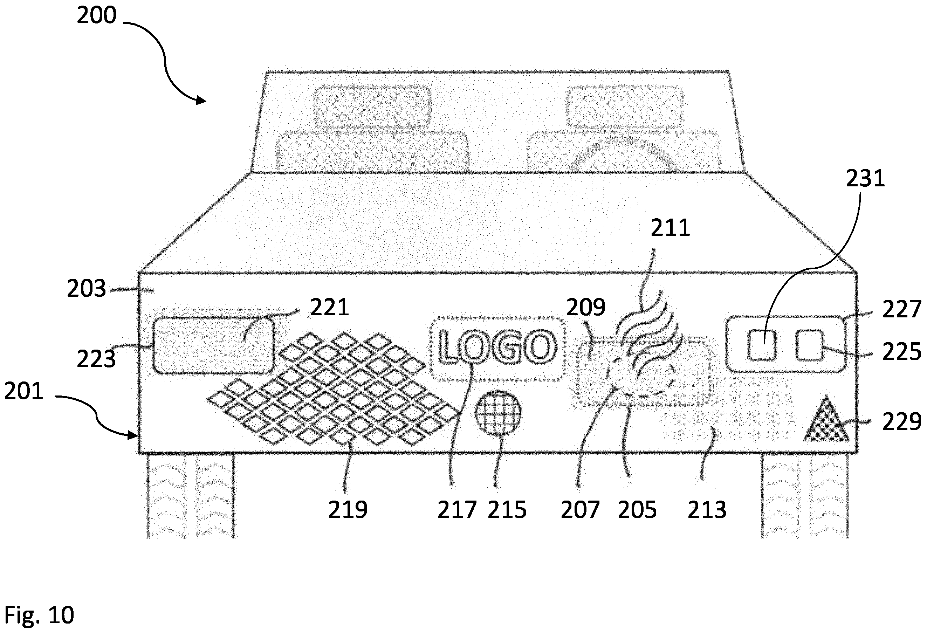

In Fig. 10, a vehicle 200 is shown. The vehicle 200 comprises a multifunctional vehicle body panel assembly 201 mounted at the front of the vehicle 200.

The vehicle body panel assembly 201 comprises a structural element 203 made of mold material and the following functional components radome 205, radar antenna 207, cover 209, graphical design, such as paint, metallization 211, graphical design, such as body colour 213, cover lens for lidar 215, (illuminated) emblem or radome 217, surface illumination 219, heating unit 221, cover lens for lighting 223, light source 225, cover lens for lighting 227, car-to-car communication module 229, and sound module 231.

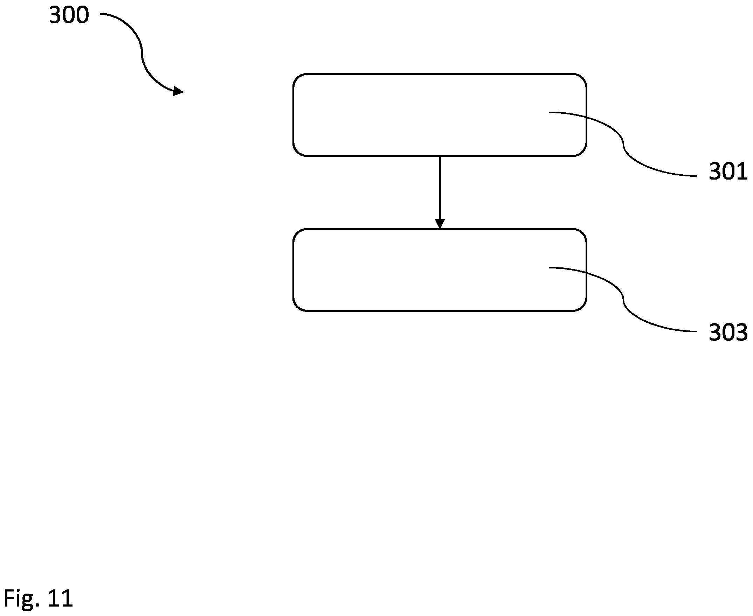

In Fig. 11, a method 300 for manufacturing a vehicle body panel assembly 100 according to Fig. 1 is shown.

The method 300 comprises a molding step 301, in particular an inmolding and/or overmolding and/or 2K molding and/or more than 2K molding process, that produces the structural elements 101, 102, 103, and an attaching step 303 that fixedly attaches theat least one sound module 105, the at least one light source 108, and at least one component to the structural elements 101, 102, and/or 103.

While this disclosure provides multiple exemplary embodiments, it will be understood by those skilled in the art that various changes may be made and equivalents may be substituted for elements thereof without departing from the scope of this disclosure. In addition, many modifications may be made to adapt a particular situation or material to the teachings of this disclosure without departing from the essential scope thereof. Therefore, it is intended that the invention, as defined in the appended claims, not be limited to any particular embodiment disclosed herein, but that the invention will include all embodiments falling within the scope of the claims. Also, in the drawings and the description, there have been disclosed exemplary embodiments and, although specific terms may have been employed, they are unless otherwise stated used in a generic and descriptive sense only and not for purposes of limitation. Moreover, the use of the terms a, an, etc. does not denote a limitation of quantity, but rather denotes the presence of at least one of the referenced item unless otherwise explicitly indicated.

### List of reference signs

- 100: vehicle body panel assembly
- 101: first structural element
- 102: second structural element
- 103: third structural element
- 105: sound module
- 106: exciter
- 107: line
- 108: light source
- 109: arrow
- 110: component
- 200: vehicle
- 201: vehicle body panel assembly
- 203: structural element
- 205: radome
- 207: radar antenna
- 209: cover
- 211: graphical design
- 213: graphical design
- 215: cover lens for lidar
- 217: (illuminated) emblem or radome
- 219: surface illumination
- 221: heating unit
- 223: cover lens for lighting
- 225: light source
- 227: cover lens for lighting
- 229: car-to-car communication module
- 231: sound module
- 300: method
- 301: molding step
- 303: attaching step

## Claims

1. A vehicle body panel assembly,
wherein the vehicle body panel assembly comprises:
- at least one structural element (101, 102, 103)
- a connection interface (104) for connecting the at least one structural element with a vehicle body,
- at least one sound module (105) comprising at least one exciter (106) coupled to the at least one structural element (101, 102, 103),
- at least one light source (108) coupled to the at least one structural element (101, 102, 103), and
- at least one component (110) from the following list of components coupled to the at least one structural element (101, 102, 103): at least one navigation unit, at least one communication unit (229), at least one antenna unit (205), at least one lighting unit, at least one signalling light unit, at least one illumination unit, at least one heating unit (221), at least one cleaning unit, at least one design element (211), at least one lighting cover lens (209), at least one sensor cover lens (207), at least one sensor housing, at least one radome (205), at least one lidome, at least one safety unit, at least one camera unit, at least one parking system unit, at least one emblem unit and at least one sensor unit, in particular at least one radar sensor unit, at least one lidar unit, at least one ultrasonic sensor unit, at least one parking sensor unit,
wherein the at least one exciter (106) is configured to cause the at least one structural element (101, 102, 103) to oscillate in a given band of frequencies.

2. The vehicle body panel assembly according to claim 1,
wherein the at least one exciter (106) is fixedly attached to the structural element (101, 102, 103).

3. The vehicle body panel assembly (100, 201) according to claim 1 or 2,
wherein the structural element (101, 102, 103) comprises a lens, in particular a front phygital shield.

4. The vehicle body panel assembly (100, 201) according to any of the preceding claims,
wherein the at least one sound module (105) comprises at least one sound source configured to generate and/or amplify a sound signal to the at least one exciter (106), such that the sound signal is transformed into sound waves by the at least one structural element (101, 102, 103).

5. The vehicle body panel assembly (100, 201) according to claim 4,
wherein the at least one sound source is attached to the structural element (101, 102, 103).

6. The vehicle body panel assembly (100, 201) according to any of the preceding claims,
wherein the vehicle body panel assembly (100, 201) comprises, as the at least one component at least one sensor unit fixedly attached to the structural element (101, 102, 103) and at least partly integrated in the structural element (101, 102, 103).

7. The vehicle body panel assembly (100, 201) according to any of the preceding claims, wherein the structural element (101, 102, 103) is a molded structure.

8. The vehicle body panel assembly (100, 201) according to any of the preceding claims, wherein the connection interface, the least one sound module, the at least one light source (108), and the at least one component are at least partially integrated into the structural element (101, 102, 103).

9. The vehicle body panel assembly (100, 201) according to any of the preceding claims, wherein the connection interface (104) is configured to mechanically connect the vehicle body panel assembly (100, 201) to a front or a rear or a side or a top of a vehicle (200).

10. The vehicle body panel assembly (100, 201) according to any of the preceding claims, further comprising a socket and/or a cable, in particular exactly one socket and/or exactly one cable for electrical connection of the vehicle body panel assembly (100, 201) with an external electrical element.

11. A vehicle (200) comprising at least one vehicle body panel assembly (100, 201) according to any of claims 1 to 10.

12. A method (300) for manufacturing a vehicle body panel assembly (100, 201) according to any of claims 1 to 10,
the method (300) comprising a molding process (301), in particular an inmolding and/or overmolding and/or 2K molding and/or more than 2K molding process, that produces the structural element (101, 102, 103), and
an attaching process (303) to fixedly attach the at least one sound module (105), the at least one light source (108), and the at least one component to the structural element (101, 102, 103).

13. The method according to claim 12,
wherein the at least one sound module, the at least one light source (108), and the at least one component are attached to the structural element (101, 102, 103) by at least partially covering them by mold material during the molding process.

14. A method for manufacturing a vehicle (200), wherein a vehicle body panel assembly (100, 201) according to any of claims 1 to 10 is mounted on a vehicle (200).

15. The method according to claim 14, wherein the vehicle body panel assembly (100, 201) is mounted on the vehicle (200) as a single part.
